# EUROPEAN PATENT APPLICATION

(11) **EP 4 748 706 A1**
(43) Date of publication of application: **27.05.2026**
(21) Application number: 25216590.7
(22) Date of filing: 18.11.2025
(51) Int. Cl.: B64C 3/56, B64C 23/06

(54) **HINGE ASSEMBLY**

(30) Priority: 20.11.2024 GB 202417095
(71) Applicant: Airbus Operations Limited, Bristol BS34 7PA (GB)
(72) Inventor: AGGARWAL, Nikhil, Bristol, BS34 7PA (GB); MORRELL, Paul, Bristol, BS34 7PA (GB)
(74) Representative: Abel & Imray LLP

(57) **Abstract**

A wing hinge assembly (13) is disclosed. The wing hinge assembly (13) comprises a wing tip fitting (19) pivotally mounted to a fixed wing fitting (15). The wing tip fitting (19) is rotatable about a hinge axis (H) with respect to the fixed wing fitting (15). One of the wing tip fitting (19) and the fixed wing fitting (15) defines a locking channel (26). The other of the wing tip fitting (19) and the fixed wing fitting (15) comprises a locking member (34) which defines a locking member axis. The wing hinge assembly (13) is configurable to a locked configuration in which the locking member (34) is received in the locking channel (26) by moving the locking member (34) in a direction perpendicular to the locking member axis.

## Description

### BACKGROUND OF THE INVENTION

The present disclosure relates to aircraft wings. More particularly, but not exclusively, this invention concerns an aircraft wing hinge assembly for rotatably mounting a wing tip device to a fixed wing. The invention also concerns an aircraft wing comprising a wing hinge assembly, and an aircraft comprising said aircraft wing.

There is a trend towards increasingly higher aspect ratio wings for large passenger aircraft, for which it is desirable to have correspondingly large wing spans. However, the maximum aircraft span is effectively limited by airport operating rules which govern various clearances required when manoeuvring around the airport (such as the span and/or ground clearance required for gate entry and taxiway usage).

Movable wing tip devices have therefore been introduced into passenger aircraft whereby a wing tip device is movable between a flight configuration for use during flight and a ground configuration for use during ground-based operations. In the flight configuration, the wing tip device forms an extension of the wing and contributes to the lift generated by the wing. In the ground configuration, the wing tip device is moved away from the flight configuration such that the effective span of the aircraft wing is reduced, thereby allowing use of existing gates and taxiways. Such an arrangement is sometimes referred to as a 'folding wing tip'.

An aircraft wing comprising a movable wing tip device requires a means of locking the wing tip device in the flight configuration so that the wing tip device is securely held in the flight configuration during flight. In some instances, it may also be desirable to lock the wing tip device in the ground configuration. However, there is limited space available within the wing for such locking systems.

Aspects of the present invention seek to mitigate one or more of the above-mentioned challenges. Alternatively or additionally, aspects of the present invention seek to provide an improved aircraft wing hinge assembly and improved apparatus relating thereto.

### SUMMARY OF THE INVENTION

The present invention provides a wing hinge assembly comprising a wing tip fitting pivotally mounted to a fixed wing fitting, the wing tip fitting being rotatable about a hinge axis with respect to the fixed wing fitting; wherein one of the wing tip fitting and the fixed wing fitting comprises a pair of opposing walls that define a locking channel therebetween; the other of the wing tip fitting and the fixed wing fitting comprises a locking member having a length extending along a locking member axis; the wing hinge assembly is configurable to a locked configuration in which the locking member is received in the locking channel and in which the wing tip fitting is prevented from rotating with respect to the fixed wing fitting by a wall of the locking channel abutting with the locking member; and the wing hinge assembly is configurable to the locked configuration by moving the locking member into the locking channel in a direction perpendicular to the locking member axis.

The wing hinge assembly in accordance with the first aspect of the invention provides the advantage of having a locking member which is movable in a direction having a vector component which is perpendicular to the locking member axis. The locking member can therefore be moved into the locking channel over a shorter distance relative to an arrangement where a similarly sized locking member is moved along its axis, which may permit the use of a smaller locking member actuator. Furthermore, this arrangement does not require the locking member to be shaped such that it can be moved along its axis into a locking channel; for example, the locking member may form part of a component (for example, a Z-shaped component) configured such that the locking member could not be moved along its axis into a locking channel.

It should be understood that when the locking member is moved in a direction perpendicular to the locking member axis, such movement is not necessarily purely perpendicular to the locking member axis. Movement of the locking member perpendicular to the locking member axis should be understood to include movement of the locking member in a direction at least having a component in a direction perpendicular to the locking member axis (in contrast to prior art arrangements where a locking member may be moved purely along its axis). The locking member may of course be moved in a direction purely perpendicular to its axis and into the locking channel. The locking member may be moved into the locking channel in a direction having a major vector component which is perpendicular to the locking member axis.

The wing hinge assembly may be configurable to the locked configuration by moving the locking member into the locking channel in a direction having a component that is perpendicular to the hinge axis and a component that is perpendicular to the locking member axis.

The locking member may take on any suitable form provided that it is able to prevent the wing tip fitting from rotating with respect to the fixed wing fitting by a wall of the locking channel abutting with the locking member. The locking member may be elongate. The locking member may comprise an elongate portion that is received in the locking member channel when the wing hinge assembly is in the locked configuration.

The locking member may comprise a first abutment surface that abuts with a first wall of the locking channel to prevent rotation of the wing tip fitting with respect to the fixed wing fitting in a first direction. The locking member may comprise a second abutment surface that abuts with a second wall of the locking channel to prevent rotation of the wing tip fitting with respect to the fixed wing fitting in a second direction which is opposite to the first direction. The first abutment surface of the locking member may be positioned on an opposite side of the locking member to the second abutment surface. The first wall of the locking channel may be opposite the second wall. Where the locking channel has opposing first and second walls, the opposing first and second walls may be configured to guide the locking member into the locking member channel.

The locking member may comprise at least one planar, abutment surface. The locking member may comprise first and second planar abutment surfaces. The first and second abutment surfaces may extend along the locking member on opposing sides of the locking member axis. The abutment surfaces of the locking member may abut with the respective opposing walls of the locking channel to prevent rotation of the wing tip fitting with respect to the fixed wing fitting when the aircraft wing assembly is in the locked configuration. The planar abutment surfaces may mitigate stress concentrations in the locking member due to the forces reacted into the locking member in use by the wing tip device and/or the fixed wing. The locking member may comprise a pin. The pin may comprise the opposing planar abutment surfaces. The locking member may have a square or rectangular cross-section. The locking may have an oval or circular cross section. The locking member may be elongate and have a length along a locking member axis. The locking member may have a width or diameter in a direction perpendicular to the locking member axis wherein the length is greater than the width.

The opposing walls that define the locking channel may be oriented parallel with a plane defined by the hinge axis and a pitch axis that intercepts the hinge axis. This arrangement may be particularly beneficial because it may help ensure that the reaction forces transmitted between the opposing walls of the channel and abutment surfaces of the locking member are perpendicular to those surfaces/walls, thereby mitigating loading of the pin in a direction that may push the locking member out of the channel. In other embodiments of the invention, one of the opposing walls of the locking channel may instead be parallel and coincident with a plane which intercepts the hinge axis. In some embodiments, the pitch axis defined by the locking channel may tend towards (rather than intercept) the hinge axis. The pitch axis defined by the locking channel may tend away from the hinge axis

The opposing walls that define the locking channel may be planar. The plane defined by the hinge axis and a pitch axis may extend in a generally spanwise direction. The plane defined by the hinge axis and a pitch axis may extend in a direction having a component in the thickness direction of the wing hinge assembly. The opposing walls that define the locking channel may extend in a direction having a spanwise component. The opposing walls that define the locking channel may extend in a direction having a component along a thickness direction of the wing hinge assembly.

The hinge assembly may be configurable to the locked configuration by moving the locking member along the plane defined by the hinge axis and the pitch axis into the locking channel.

The other of the wing tip fitting and the fixed wing fitting may comprise a pair of opposing surfaces that define a guide channel therebetween. The locking member may be movably mounted in the guide channel. In the locked configuration, the wing tip fitting may be prevented from rotating with respect to the fixed wing fitting by the opposing surfaces of the guide channel abutting with the locking member. In the locked configuration of the hinge assembly, the opposing surfaces of the guide channel may be coplanar with the opposing surfaces of the locking member channel. The guide channel is spaced apart from the locking channel along the hinge axis.

The opposing surfaces of the locking channel may define an opening into which the locking member is moved. The locking channel may comprise a flared opening. Opposing walls of the locking channel may taper towards one another within the locking channel. In this configuration, camming engagement between the locking member and flared wall sections may move the locking channel into alignment with the locking member as the locking member is moved into the locking channel.

An end wall may extend between the opposing surfaces, opposite the opening. The end wall be formed by wall sections that taper towards one another. For example, the end wall may be formed by a curve and/or two linear wall sections that meet at a point. The locking member may be complementarily shaped with the end wall to sit snugly against the tapered end wall. This configuration of the end wall and locking member may mitigate play in the locked configuration of the hinge assembly.

The wing hinge assembly may be configurable to the locked configuration by moving the locking member towards the hinge axis. The wing hinge assembly may be configurable to the locked configuration by moving the locking member in a spanwise direction of the wing hinge assembly. The position of the locking member when hinge assembly is in the locked configuration may be referred to herein as the locked position of the locking member. The position of the locking member when the hinge assembly is in the unlocked configuration may be referred to herein as the unlocked position of the locking member. The locking member axis may be oriented parallel with the hinge axis. The locking member axis may be oriented parallel with the hinge axis when the locking member is in the locked position. The locking member axis may be oriented parallel with the hinge axis when the locking member is in the unlocked position.

The wing hinge assembly may be configurable to the locked configuration by moving the locking member in a spanwise direction of the hinge assembly into the locking channel. This arrangement enables the actuator which is configured to move the locking member to be positioned at a side of the hinge axis (rather than along the hinge axis) which is advantageous because the actuator can make use of space along the spanwise direction of the wing.

The wing tip fitting may be rotatable about the hinge axis with respect to the fixed wing between a flight configuration for use during flight and a ground configuration for use in ground-based operations. The wing hinge assembly may be configurable to the locked configuration when the wing tip fitting is in the flight configuration to thereby prevent the wing tip fitting being moved out of the flight configuration in use.

The fixed wing fitting may comprise a body portion which is configured to be mounted to the fixed wing. The fixed wing fitting may comprise one or more hinge lugs which extend from the body portion. The hinge lugs may be integrally formed with the body portion of the fixed wing fitting. The hinge lugs may be fastened or otherwise secured to the body portion of the fixed wing fitting. The wing tip fitting may comprise a body portion which is configured to be mounted to the wing tip device. The wing tip fitting may comprise one or more locking lugs which extend from the body portion. The locking lugs may be integrally formed with the body portion of the wing tip fitting. The locking lugs may be fastened or otherwise secured to the body portion of the wing tip fitting.

The wing tip fitting may comprise the one or more hinge lugs, in which case the hinge lugs may extend from the body portion of the wing tip fitting. The fixed wing fitting may comprise the one or more locking lugs, in which case the locking lugs may extend from the body portion of the fixed wing fitting. The wing tip fitting may be pivotally mounted to the fixed wing fitting via a hinge pin. The hinge lugs and locking lugs may be interleaved. A hinge pin may pass through the interleaved hinge lugs and locking lugs. The hinge pin may define the hinge axis.

The wing tip fitting may comprise at least one locking lug which provides the locking channel. The locking member may be positioned in a body portion of the fixed wing fitting. In the flight configuration the locking lug may be located inside the body portion of the fixed wing fitting such that the locking member can be moved into the locking channel. In the ground configuration the locking lug may be rotated to a position in which the locking member cannot be moved into the locking channel. In the ground configuration the locking channel may be rotated to a position in which it is not located within the body portion of the fixed wing fitting. The wing tip device may comprise a plurality of locking lugs. Each locking lug may provide a locking channel. A locking channel may be provided by a plurality of locking lugs.

The wing hinge assembly may comprise a locking member actuator configured to move the locking member between the locked and unlocked positions. The locking member actuator may be positioned within a body portion of the fixed wing fitting. The locking member actuator may be positioned within a body portion of the wing tip fitting. The locking member actuator may be arranged to the side of the hinge axis along the spanwise direction of the hinge assembly. The locking member actuator may comprise any suitable type of actuator. The locking member actuator may comprise a linear actuator. The locking member actuator may comprise a rotary actuator.

According to a second aspect, the present invention provides a wing hinge assembly comprising a wing tip fitting pivotally mounted to a fixed wing fitting, the wing tip fitting being rotatable about a hinge axis with respect to the fixed wing fitting between a flight configuration and a ground configuration; wherein one of the fixed wing fitting or the wing tip fitting comprises a channel; the other of the fixed wing fitting or the wing tip fitting comprises an elongate locking member that extends along a locking member axis; in the flight configuration the locking member is movable in a radial direction with respect to the locking member axis, towards the hinge axis, into the channel to lock the wing tip fitting in the flight configuration. The wing hinge assembly of the second aspect of the invention may incorporate any of the features of the wing hinge assembly of the first aspect of the invention.

According to a third aspect, the present invention provides an aircraft wing assembly comprising a wing hinge assembly, a fixed wing, and a wing tip device, wherein the wing tip device is mounted to the wing tip fitting of the wing hinge assembly; the fixed wing is mounted to the fixed wing fitting of the wing hinge assembly; and the wing tip device is configurable between: (i) a flight configuration for use during flight and (ii) a ground configuration for use during ground-based operations, in which ground configuration the wing tip device is rotated away from the flight configuration about the hinge axis of the wing hinge assembly such that the span of the aircraft wing assembly is reduced. The wing hinge assembly may be a wing hinge assembly in accordance with the first or second aspects of the invention.

The fixed wing may have an upper surface and a lower surface (or an upper wing skin and a lower wing skin). The wing tip device may have an upper surface and a lower surface (or an upper wing skin and a lower wing skin). In the flight configuration, the upper and lower surfaces of the wing tip device may be continuations of the upper and lower surfaces of the fixed wing. In the flight configuration, the trailing edge of the wing tip device may be a continuation of the trailing edge of the fixed wing. The leading edge of the wing tip device may be a continuation of the leading edge of the fixed wing. It may be that there is a smooth transition from the fixed wing to the wing tip device. It will be appreciated that there may be a smooth transition even when the shape of the wing is such that there are changes in sweep or twist at the junction between the fixed wing and wing tip device. It may be that there are no discontinuities at the junction between the fixed wing and wing tip device.

In the flight configuration, the span of the wing may exceed an airport compatibility limit. In the ground configuration the span is reduced such that the span (with the wing tip device in the ground configuration) is less than, or substantially equal to, the airport compatibility limit. The airport compatibility limit is preferably a span limit (for example relating to clearance restrictions for buildings, signs, other aircraft). The compatibility limit is preferably a gate limit. In the ground configuration, the wing tip device may be positioned such that the wing has its shortest span. In the ground configuration, the wing tip device may be oriented substantially vertical.

The wing tip device may be a wing tip extension, for example a generally planar tip extension. In other embodiments, the wing tip device may comprise, or consist of, a non-planar device, such as a winglet. The wing tip device may comprise a further wing section having a further movable wing tip device at its distal end. The ordinarily skilled person will be aware of other devices suitable for movably placing at the wing tip. The wing tip device may include, for example, trailing edge moveable devices for control (ailerons) or leading edge devices for stall protection, such as slats or droop nose devices. It will be appreciated that the term 'wing tip device' does not limit the size of that structure. For example, the wing tip device may be a large wing extension, and may equally be considered a secondary, or outboard, wing. The length of the wing tip device may be more than 3m, preferably more than 4m, and more preferably more than 5m.

The span ratio of the fixed wing relative to the wing tip device may be such that the fixed wing comprises at least 60%, 70%, 80%, 90%, or more, of the overall span of the wing.

When the wing tip device is in the ground configuration, the aircraft may be unsuitable for flight. For example, the wing tip device may be aerodynamically and/or structurally unsuitable for flight in the ground configuration. The aircraft is preferably configured such that, during flight, the wing tip device is not moveable to the ground configuration. The aircraft may comprise a sensor for sensing when the aircraft is in flight. When the sensor senses that the aircraft is in flight, a control system is preferably arranged to disable the possibility of moving the wing tip device to the ground configuration. In the ground configuration the wing tip device may be held in place. For example, the wing tip device may be latched or locked in place to prevent movement back towards the flight configuration.

According to a fourth aspect, the present invention provides an aircraft comprising an aircraft wing assembly in accordance with the third aspect of the invention.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more (in some cases 90 tonnes or more). The aircraft may have an operating empty weight of at least 20 tonnes, optionally at least 30 tonnes, and possibly about 40 tonnes or more.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
FIGS. 1A and 1B show a plan view and a frontal view respectively, of an aircraft according to an embodiment of the invention;
FIG. 2 is a perspective view of a wing hinge assembly of the aircraft in a flight configuration;
FIG. 3 shows the wing hinge assembly in a ground configuration;
FIG. 4 is a magnified view showing the arrangement of the locking lugs of the wing tip fitting of the wing hinge assembly;
FIG. 5 shows the locking member of the wing hinge assembly in isolation;
FIG. 6A is a schematic drawing of part of the wing hinge assembly showing the interaction between the locking lugs of wing tip fitting and the body portion of the fixed wing fitting when the wing tip fitting is positioned between the ground configuration and the flight configuration;
FIG. 6B is a schematic drawing of part of the wing hinge assembly showing the interaction between the locking lugs of wing tip fitting and the body portion of the fixed wing fitting when the wing tip fitting is in the flight configuration;
FIG. 6C corresponds to FIG. 6A but with the hinge assembly shown in the locked configuration in which the wing tip fitting is in the flight configuration and the locking member is in the locked position;
FIG. 7 is a side elevation view of the arrangement shown in FIG. 2 and illustrates the unlocked and locked positions of the locking member; and
FIG. 8 shows the arrangement of the locking lugs of a wing hinge assembly according to a further embodiment of the invention.

### DETAILED DESCRIPTION

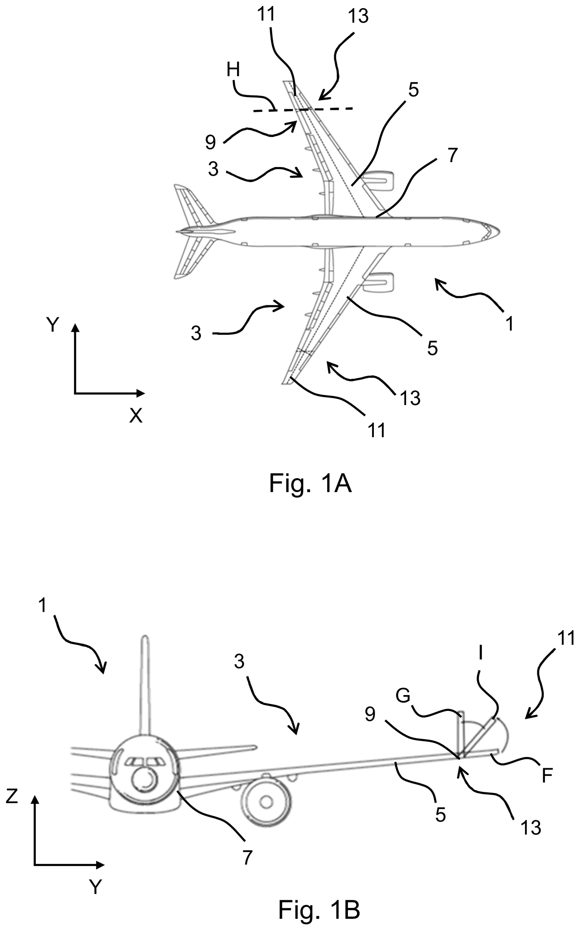

FIGS. 1A and 1B show a plan view and a front view of an aircraft 1 according to a first embodiment of the invention. The aircraft 1 comprises two wings 3 extending outwardly from a fuselage in a spanwise direction Y which is perpendicular to a longitudinal direction X (only one wing is fully visible in FIG. 1B). Each wing 3 comprises a fixed wing 5 extending from a root 7 to a tip 9. At the tip 9 of the fixed wing 5, the wing 3 also comprises a moveable wing tip device 11. In this embodiment, the wing tip device 11 comprises a planar wing tip extension. The wing tip device 11 is rotatably mounted to the fixed wing 5 via a hinge assembly 13. As such, the wing tip device 11 is able to rotate about a hinge axis H of the hinge assembly 13, relative to the fixed wing 5.

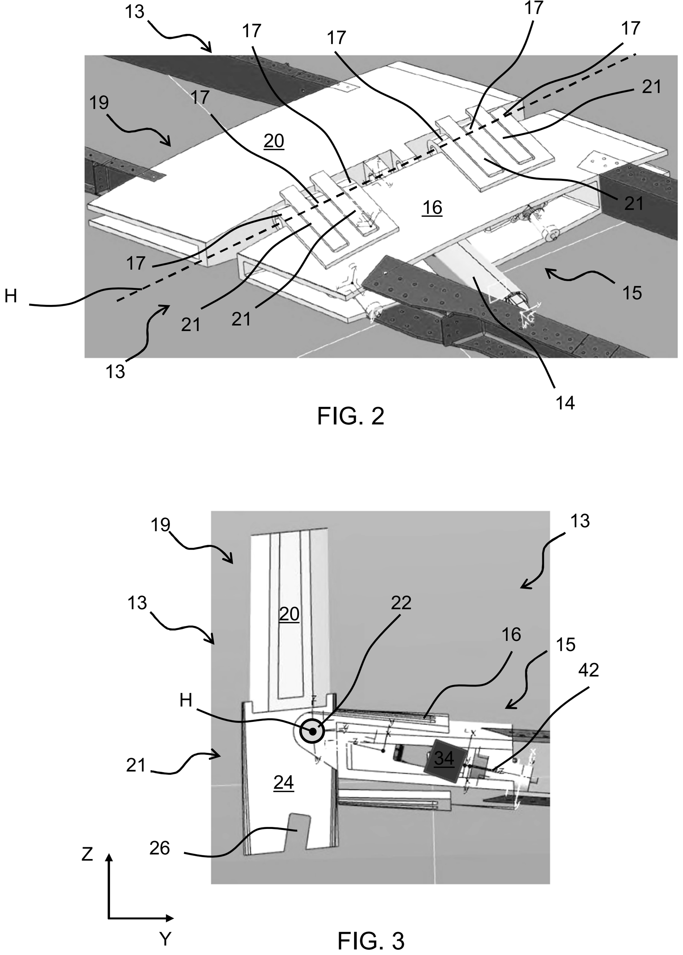

Referring to FIG. 1B, the wing tip device 11 is rotatable about the hinge axis H between a flight configuration F and a ground configuration G. FIG. 1B also shows the wing tip device 11 in an intermediate configuration I, part-way between the flight configuration and the ground configuration. Rotation of the wing tip device 11 is effected by an actuator 14 which is shown in FIG. 2.

In the flight configuration F, the wing tip device 11 is an extension of the fixed wing 5. Accordingly, the upper and lower surfaces of the fixed wing 5 are continuous with the upper and lower surfaces of the wing tip device 11. The leading and trailing edges of the fixed wing 5 are also continuous with the respective leading and trailing edges of the wing tip device 11. FIG. 2 shows the configuration of the hinge assembly 13 when the wing tip device 11 is in the flight configuration; this configuration shall be referred to herein as the flight configuration of the wing hinge assembly 13.

In the ground configuration G, the wing tip device 11 is oriented in a substantially upright position such that the effective span of the wing 3 is reduced. The movable wing tip device 11 therefore enables the aircraft 1 to have a relatively large wingspan during flight and to comply with airport gate limits when on the ground. FIG. 3 shows the configuration of the hinge assembly 13 when the wing tip device 11 is in the ground configuration; this configuration shall accordingly be referred to herein as the ground configuration of the wing hinge assembly 13.

With reference to FIG. 2, the hinge assembly 13 comprises a fixed wing fitting 15 and a wing tip fitting 19. The fixed wing fitting 15 comprises a body portion 16 which is configured to be mounted to the fixed wing 5 and a plurality of hinge lugs 17 which extend from the body portion 16. The wing tip fitting 19 comprises a body portion 20 which is configured to be mounted to the wing tip device 11 and a plurality of locking lugs 21 which extend from the body portion 20. The wing tip fitting 19 is pivotally mounted to the fixed wing fitting 15 via a hinge pin 22, which can be seen in FIG. 3. The hinge pin 22 passes through the interleaved the hinge lugs 17 and locking lugs 21 and defines the hinge axis H.

With reference to FIG. 3, the locking lugs 21 of the wing tip fitting 19 each comprise a locking portion 24 that extends past the hinge axis H in a direction away from the body portion 20. The locking portions 24 are configured to be rotated into and out of the body portion 16 of the fixed wing fitting 15 as the wing tip fitting 19 is rotated between the flight configuration and the ground configuration. As can be best seen in FIG. 2, when the hinge assembly 13 is in the flight configuration, the locking portions 24 extend into the body portion 16 of the fixed wing fitting 15. As can be best seen in FIG. 3, when the hinge assembly 13 is in the ground configuration, the locking portions 24 are located outside of the body portion 16 of the fixed wing fitting 15.

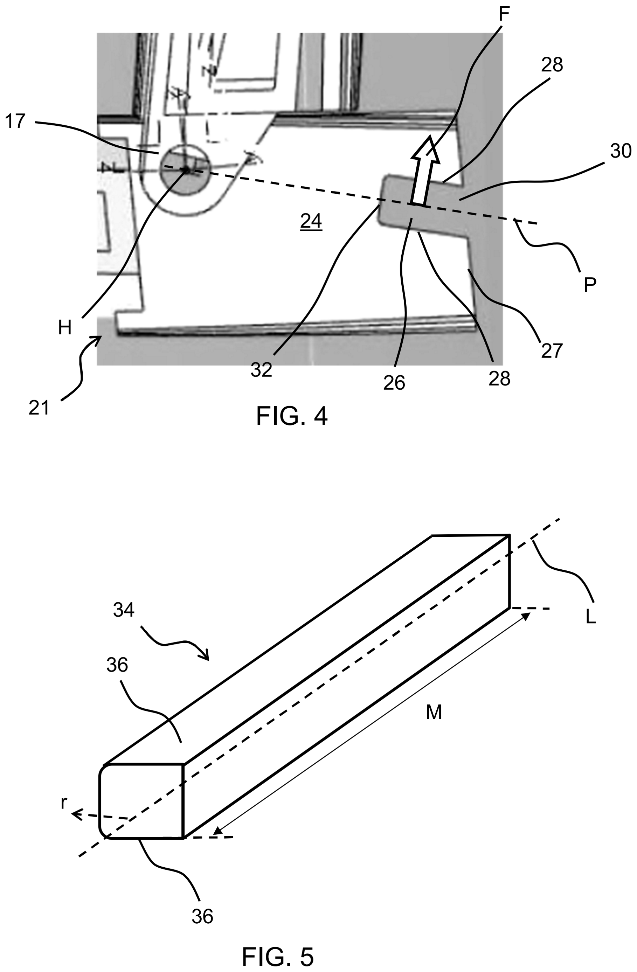

As illustrated in FIG. 4, a locking channel 26 is formed in the end 27 of each of the locking portions 24. The locking channel 26 extends from an opening 30 towards the hinge axis H along a pitch axis P that intercepts the hinge axis H. In some embodiments, the pitch axis P defined by the locking channel may not intercept the hinge axis H. However, it is preferable for the pitch axis to at least tend towards the hinge axis. In this case the orientation of the locking channel 26 is such that, when the wing tip fitting 19 is in the flight configuration, the locking channel extends in a direction having a component along the spanwise direction Y and along the thickness direction Z of the wing hinge assembly 13. The locking channel 26 comprises walls provided by opposing planar surfaces 28 which are oriented parallel with a plane defined by the hinge axis H and the pitch axis P. The locking channel 26 has an end wall 32 at an opposite end to the opening 30.

The hinge assembly 13 is configured to be locked in the flight configuration by moving a locking member 34 of the fixed wing fitting 15 into the locking channel 26 when the hinge assembly 13 is in the flight configuration, as will be described in more detail below. The locking member 34, which is shown in isolation in FIG. 4, comprises an elongate pin having a length M which extends along a locking member axis L. The locking member 34 comprises parallel planar abutment surfaces 36 that extend along the locking member 34 on opposing sides of the locking member axis L. As will be described in more detail below, the locking member is configured to be moved between a locked position and an unlocked position by moving the locking member perpendicular to the locking member axis L, which is also referred to herein as a radial direction r with respect to the locking member axis L.

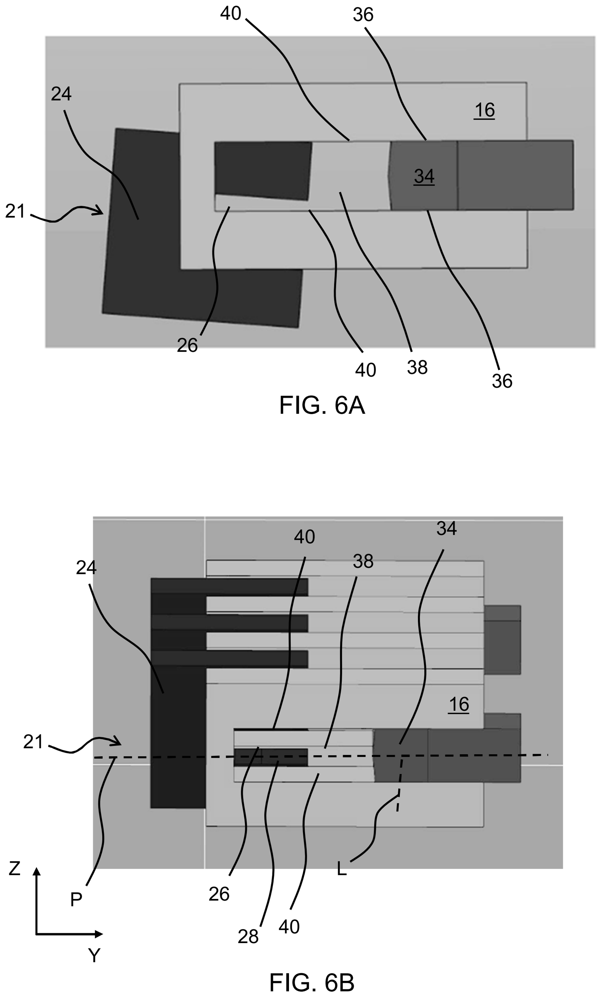

As shown schematically in FIG. 6A to FIG. 6C, the locking member 34 is movably mounted within a guide channel 38 provided by the body portion 16 of the fixed wing fitting 15. The guide channel 38 is defined by opposing parallel walls 40 which are oriented parallel with the pitch axis P that intercepts the hinge axis H. The locking member 34 is received in the channel 38 so that the abutment surfaces 36 of the locking member are parallel with the respective walls 40 of the guide channel 38.

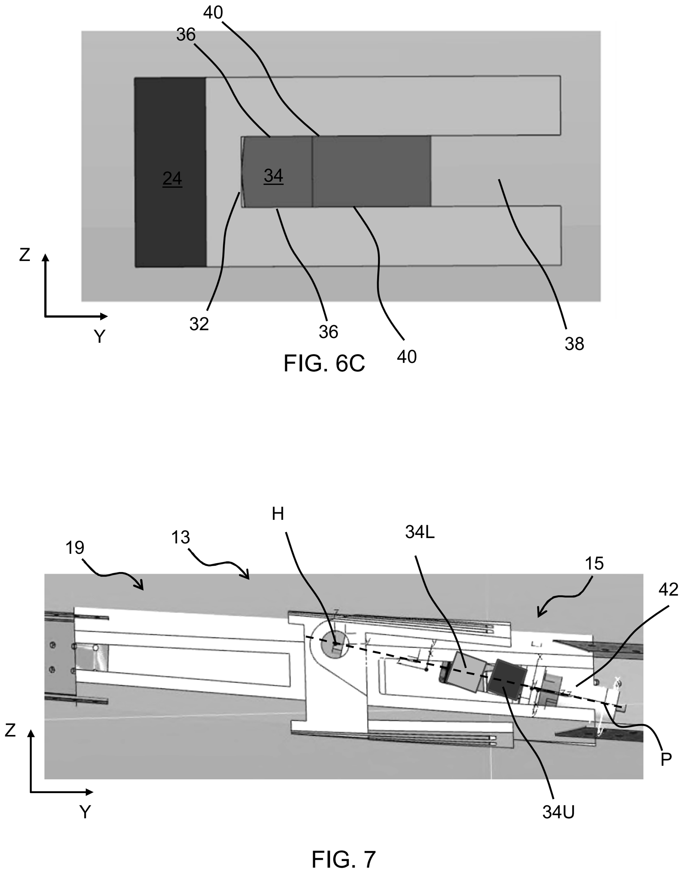

Configuration of the hinge assembly 13 to the locked configuration will now be described. As the wing hinge assembly 13 is moved from the ground configuration shown in FIG. 3 to the flight configuration shown in FIG. 2, the locking portions 24 of the wing tip fitting 19 are moved into the body portion 16 of the fixed wing fitting 15 to a position in which the locking channels 26 are aligned with the guide channel 38. In this configuration, the opposing walls 40 of the guide channel 38 are co-planar with the opposing surfaces 28 of the locking channels 26, as can be best seen in FIG. 6B. The locking member 34 is then moved in a spanwise direction Y of the wing hinge assembly 13 from an unlocked position shown in FIG. 6B along the guide channel 38, towards the hinge axis H and into a locked position shown in FIG. 6C in which the locking member 34 is received in the locking channels 26 wing tip fitting 19. The locked position of the locking member 34L and the unlocked position of the locking member 34U are shown in FIG. 7. The locking member 34 is moved between the locked and unlocked positions by a locking member actuator 42 which is positioned within the body portion 16 of the fixed wing fitting 15, the locking member actuator 42 being arranged to the side of the hinge axis H along the spanwise Y direction of the hinge assembly 13. In the present embodiment of the invention, the locking member actuator 42 is a linear actuator, but in other embodiments of the invention other types of actuator may be used. For example, the locking member actuator may be a rotary actuator.

In contrast to prior art arrangements, the locking member 34 moves from the unlocked position to the locked position in a direction which is perpendicular to the locking member axis L, therefore the locking member 34 can be moved into the locked position over a relatively short distance relative to an equivalent arrangement wherein the locking member is moved to a locked position in a direction parallel with the locking member axis.

In the locked configuration of the hinge assembly 13 the wing tip fitting 19 is prevented from rotating with respect to the fixed wing fitting 15 by the opposing surfaces 28 of the locking channels 26 of the wing tip fitting 19 abutting with the planar abutment surfaces 36 of the locking member 34. It is advantageous for the abutment surfaces 36 of the locking member 34 to be planar in order to distribute the load reacted into the abutment surface 36. However, in other embodiments of the invention, the abutment surfaces of the locking member are not planar. For example, the locking member could be provided by a pin having a circular cross-section.

With reference to FIG. 4, a further advantage of the embodiment of the invention described above is that the opposing planar surfaces 28 of the locking channel and abutment surfaces 36 of the locking member 34 are oriented parallel with a plane defined by the hinge axis H and the pitch axis P when the locking member 34 is in the locked position. This arrangement ensures that the force F due to the moment about the hinge axis H caused by the load acting on the wing tip device 11 in use (for example, the aerodynamic loads during flight) is reacted perpendicularly between those surfaces, which mitigates loading of the locking member 34 in a manner which would push the locking member 34 out of the locking channels 26. Note that in this embodiment, the locking member 34 is moved to the locked position along the plane defined by the pitch axis P and the hinge axis H (movement of the pin between the locked position and the locked position therefore has a component along the spanwise direction Y of the wing hinge assembly 13 and a component along the through thickness direction Z of the wing hinge assembly 13). In other embodiments of the invention, one of the opposing surfaces of the locking channel may instead be parallel and coincident with a plane which intercepts the hinge axis. However, in some embodiments, the opposing surfaces of the locking channel may not be parallel with a plane which intercepts the hinge axis.

Whilst the present invention has been described and illustrated with reference to particular embodiments, it will be appreciated by those of ordinary skill in the art that the invention lends itself to many different variations not specifically illustrated herein. For example, in a further embodiment of the invention, the wing hinge assembly may be configured such that the locking member is configured to be received in the locking channel when the wing tip device is in the ground configuration to thereby lock the wing tip device in the ground configuration. In an embodiment of the invention similar to the wing hinge assembly described above, the wing tip fitting 19 becomes the fixed wing fitting and the fixed wing fitting 15 becomes the wing tip fitting such that the wing tip fitting comprises the locking member and the fixed wing fitting comprises the locking channel.

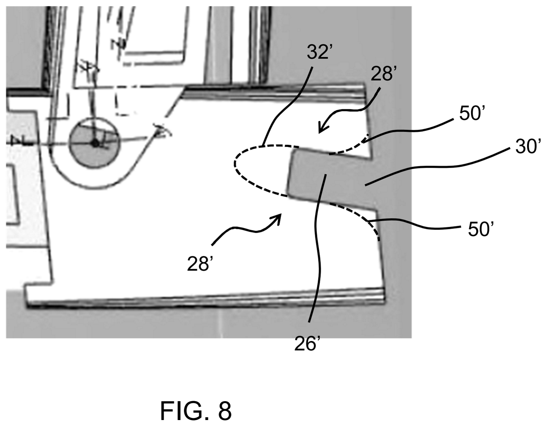

In embodiments of the invention, the locking channel and locking member may be shaped to aid alignment of the locking channel with the locking member. With reference to FIG. 8, in some embodiments the locking channel 26' may comprise a flared opening 30' with sections 50'of the opposing walls 28' of the locking channel 26' tapering towards one another within the locking channel 26'. In this configuration, if the locking channel 26' and locking member are misaligned upon insertion of the locking member into the locking channel 26', the locking member will abut with the flared wall sections 50' and the camming engagement between the locking member and flared wall sections will move the locking channel 26' into alignment as the locking member is moved further into the locking channel.

Again with reference to FIG. 8, in embodiments of the invention the end wall 32' of the locking channel 26' may be tapered and the locking member may be complementarily shaped to sit snugly against the tapered end wall 32' so that any play is removed from the hinge assembly in the locked configuration.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. A wing hinge assembly comprising a wing tip fitting pivotally mounted to a fixed wing fitting, the wing tip fitting being rotatable about a hinge axis with respect to the fixed wing fitting; wherein
one of the wing tip fitting and the fixed wing fitting comprises a pair of opposing walls that define a locking channel therebetween;
the other of the wing tip fitting and the fixed wing fitting comprises a locking member having a length extending along a locking member axis;
the wing hinge assembly is configurable to a locked configuration in which the locking member is received in the locking channel and in which the wing tip fitting is prevented from rotating with respect to the fixed wing fitting by a wall of the locking channel abutting with the locking member; and
the wing hinge assembly is configurable to the locked configuration by moving the locking member into the locking channel in a direction perpendicular to the locking member axis.

2. A wing hinge assembly according to claim 1, wherein the locking member comprises a first planar abutment surface that abuts with the wall of the locking channel to prevent rotation of the wing tip fitting with respect to the fixed wing fitting when the aircraft wing assembly is in the locked configuration.

3. A wing hinge assembly according to claim 2, wherein the locking member comprises a second planar abutment surface, the first and second planar abutment surfaces extending along the locking member on opposing sides of the locking member axis; and the first and second planar abutment surfaces of the locking member abut with respective opposing walls of the locking channel to prevent rotation of the wing tip fitting with respect to the fixed wing fitting when the aircraft wing assembly is in the locked configuration.

4. A wing hinge assembly according to claim 3, wherein the opposing walls that define the locking channel are oriented parallel with a plane defined by the hinge axis and a pitch axis that intercepts the hinge axis.

5. A wing hinge assembly according to claim 4, wherein the aircraft wing assembly is configurable to the locked configuration by moving the locking member along the plane defined by the hinge axis and the pitch axis into the locking channel.

6. A wing hinge assembly according to any preceding claim, wherein the other of the wing tip fitting and the fixed wing fitting comprises a pair of opposing surfaces that define a guide channel therebetween; the locking member is movably mounted in the guide channel; and, in the locked configuration, the wing tip fitting is prevented from rotating with respect to the fixed wing fitting by the opposing surfaces of the guide channel abutting with the locking member.

7. A wing hinge assembly according to claim 6, wherein the guide channel is spaced apart from the locking channel along the hinge axis.

8. A wing hinge assembly according to any preceding claim, wherein the opposing walls of the locking channel define an opening into which the locking member is moved and a rear wall extends between the opposing surfaces, opposite the opening.

9. A wing hinge assembly according to any preceding claim, wherein the wing hinge assembly is configurable to the locked configuration by moving the locking member towards the hinge axis and, optionally, the locking member axis is oriented parallel with the hinge axis.

10. A wing hinge assembly according to any preceding claim, wherein the wing hinge assembly is configurable to the locked configuration by moving the locking member in a spanwise direction of the hinge assembly into the locking channel.

11. A wing hinge assembly according to any preceding claim, wherein the wing tip fitting is rotatable about the hinge axis with respect to the fixed wing between a flight configuration for use during flight and a ground configuration for use in ground-based operations; and wherein the wing hinge assembly is configurable to the locked configuration when the wing tip fitting is in the flight configuration to thereby prevent the wing tip fitting being moved out of the flight configuration in use.

12. A wing hinge assembly according to claim 11, wherein the wing tip fitting comprises at least one locking lug which provides the locking channel; the locking member is positioned in a body portion of the fixed wing fitting; in the flight configuration the locking lug is located inside the body portion of the fixed wing fitting such that the locking member can be moved into the locking channel; and in the ground configuration the locking lug is rotated to a position in which the locking member cannot be moved into the locking channel.

13. A wing hinge assembly according to any preceding claim, wherein the wing hinge assembly comprises a locking member actuator configured to move the locking member into and out of the locking channel to thereby configure the wing hinge assembly between the locked configuration and an unlocked configuration and, optionally, the locking member actuator is positioned within a body portion of the fixed wing fitting or a body portion of the wing tip fitting.

14. An aircraft wing assembly comprising a wing hinge assembly according to any preceding claim, a fixed wing, and a wing tip device, wherein the wing tip device is mounted to the wing tip fitting of the wing hinge assembly; the fixed wing is mounted to the fixed wing fitting of the wing hinge assembly; and the wing tip device is configurable between: (i) a flight configuration for use during flight and (ii) a ground configuration for use during ground-based operations, in which ground configuration the wing tip device is rotated away from the flight configuration about the hinge axis of the wing hinge assembly such that the span of the aircraft wing assembly is reduced.

15. An aircraft comprising an aircraft wing assembly according to claim 14.
